# EUROPÄISCHE PATENTSCHRIFT

(11) **EP 3 198 124 B1**
(45) Veröffentlichungstag und Bekanntmachung des Hinweises auf die Patenterteilung: **17.02.2021**
(21) Anmeldenummer: 15760411.7
(22) Anmeldetag: 26.08.2015
(51) Int. Cl.: F01P 7/16, F01P 3/20, F16K 11/085

(54) **BRENNKRAFTMASCHINE**
INTERNAL COMBUSTION ENGINE
MOTEUR À COMBUSTION INTERNE

(30) Priorität: 24.09.2014 DE 102014219252
(43) Veröffentlichungstag der Anmeldung: 02.08.2017
(73) Patentinhaber: Volkswagen Aktiengesellschaft, 38440 Wolfsburg (DE)
(72) Erfinder: KLOFT, Manfred, 38154 Königslutter (DE); TÖLLE, Stefan, 38154 Königslutter (DE)
(86) Internationale Anmeldenummer: PCT/EP2015/069493
(87) Internationale Veröffentlichungsnummer: WO 2016/045895

(56) Entgegenhaltungen:
- FR-A1- 2 849 673
- FR-A1- 2 849 673
- FR-A1- 2 850 726
- FR-A1- 2 850 726
- US-A1- 2003 079 728
- US-A1- 2003 079 728

## Beschreibung

Die Erfindung betrifft eine Brennkraftmaschine.

Brennkraftmaschinen für Kraftfahrzeuge weisen in der Regel ein Kühlsystem auf, in dem ein Kühlmittel mittels einer oder mehrerer Pumpen in mindestens einem Kühlkreis gepumpt wird und dabei Wärmeenergie von in den Kühlkreis integrierten Komponenten, insbesondere einem Verbrennungsmotor sowie einem Ölkühler und/oder einem Ladeluftkühler, aufnimmt. Diese Wärmeenergie wird anschließend in einem Umgebungswärmetauscher, dem sogenannten Hauptwasserkühler, sowie zeitweise in einem Heizungswärmetauscher an die Umgebungsluft, im Fall des Heizungswärmetauschers an die zur Klimatisierung des Innenraums des Kraftfahrzeugs vorgesehene Umgebungsluft, abgegeben.

Kühlsysteme moderner Kraftfahrzeuge weisen vielfach mehrere Kühlkreise auf. Beispielsweise ist es bekannt, einen so genannten großen beziehungsweise Hauptkühlkreis sowie einen kleinen Kühlkreis vorzusehen, die abschnittsweise integral ausgebildet sind, und wobei mittels eines thermostatgesteuerten Ventils das Kühlmittel entweder über den großen oder den kleinen Kühlkreis geführt wird. Dies erfolgt in Abhängigkeit von der Temperatur des Kühlmittels, so dass beispielsweise in einer Warmlaufphase der Brennkraftmaschine, wenn das Kühlmittel einen vorgesehenen Betriebstemperaturbereich noch nicht erreicht hat, dieses in dem kleinen Kühlkreis gefördert wird, wodurch der Hauptwasserkühler, d.h. derjenige Umgebungswärmetauscher, in dem das Kühlmittel durch Wärmeübergang auf die Umgebungsluft hauptsächlich gekühlt wird, umgangen wird. Hat das Kühlmittel dagegen den Betriebstemperaturbereich erreicht, wird mittels des thermostatgesteuerten Ventils das Kühlmittel in dem großen Kühlkreis gefördert, so dass durch einen Wärmeübergang von dem Kühlmittel auf die Umgebungsluft ein Überhitzten des Kühlsystems vermieden wird. Der Heizungswärmetauscher als zweiter Umgebungswärmetauscher ist dagegen regelmäßig in den kleinen Kühlkreis integriert, wodurch auch schon in der Warmlaufphase der Brennkraftmaschine eine Beheizung des Innenraums des Kraftfahrzeugs ermöglicht wird.

Die (Haupt-)Kühlmittelpumpe des Kühlsystems wird regelmäßig mechanisch von dem Verbrennungsmotor der Brennkraftmaschine angetriebenen. Ihre Förderleistung ist somit grundsätzlich proportional zu der Drehzahl, mit der eine Kurbelwelle des Verbrennungsmotors rotiert. Obwohl mit steigender Drehzahl des Verbrennungsmotors tendenziell auch der Kühlleistungsbedarf steigt, entspricht die durch den Betrieb der Pumpe theoretisch erzielbare Kühlleistung in vielen Betriebszuständen nicht dem tatsächlichen Kühlleistungsbedarf. Da in allen Betriebszuständen eine ausreichend hohe Kühlleistung zur Verfügung stehen soll, sind solche mechanisch angetriebenen Pumpen vielfach überdimensioniert. Die Bestrebungen, den Kraftstoffbedarf von Kraftfahrzeugen zu reduzieren, hat daher zu der Entwicklung von mechanisch angetriebenen Kühlmittelpumpen geführt, die in Grenzen hinsichtlich des Volumenförderstroms regelbar sind. Eine solche regelbare mechanisch angetriebene Kühlmittelpumpe ist beispielsweise aus der DE 10 2010 044 167 A1 bekannt.

Bei den Kühlsystemen moderner Kraftfahrzeuge kann die Hauptregelung des Volumenstroms des Kühlmittels somit mittels regelbarer Kühlmittelpumpen erfolgen, während die Verteilung des Volumenstroms auf die einzelnen, jeweils einen unterschiedlichen Kühlbedarf aufweisenden Komponenten mittels aktiv und insbesondere über Thermostate angesteuerte Ventile gesteuert werden kann. Beispielsweise offenbart die DE 103 42 935 A1 eine Brennkraftmaschine mit einem Kühlkreis, der eine von einem Verbrennungsmotor mechanisch angetriebene Pumpe umfasst. Der Fördervolumenstrom der Pumpe ist somit von der Drehzahl des Verbrennungsmotors abhängig. Um für mehrere in den Kühlkreis integrierte Wärmetauscher, wie insbesondere Kühlkanäle eines Zylinderkurbelgehäuses und eines Zylinderkopfs des Verbrennungsmotors sowie einen Heizungswärmetauscher für eine Innenraumheizung eines von der Brennkraftmaschine angetriebenen Kraftfahrzeugs, individuell angepasste Volumenströme des Kühlmittels zu erreichen, sind eine Mehrzahl von jeweils individuell ansteuerbaren Regelventilen in den Kühlkreislauf integriert. Die DE 103 42 935 A1 offenbart weiterhin, dass die Kanäle des Zylinderkurbelgehäuses und des Zylinderkopfs parallel verschaltet sind, wodurch ermöglicht wird, die Kühlleistung für diese Komponenten individuell zu steuern. Das aus der DE 103 42 935 A1 bekannte Kühlsystem ist relativ aufwändig.

In der DE 100 47 080 A1 ist ein Verbrennungsmotor mit einem Zylinderkurbelgehäuse und einem Zylinderkopf offenbart, die jeweils Kühlmittelkanäle, die Teil eines Kühlkreises sind, aufweisen. Kühlmittel wird von einer Kühlmittelpumpe zunächst in eine in das Zylinderkurbelgehäuse integrierte Verteilerleiste gefördert, die in Form von zu der Trennebene zu dem Zylinderkopf offenen Kanälen ausgebildet ist. Ausgehend von der Verteilerleiste strömt das Kühlmittel in die Kühlmittelkanäle des Zylinderkurbelgehäuses sowie durch Öffnungen in einer zwischen dem Zylinderkurbelgehäuses und dem Zylinderkopf angeordneten Zylinderkopfdichtung in die Kühlmittelkanäle des Zylinderkopfs. Dadurch sind Verbrennungsmotoren, die identische Zylinderkurbelgehäuse und Zylinderkopfgehäuse nutzen, durch die Verwendung von Zylinderkopfdichtungen mit unterschiedlich dimensionierten Durchtrittsöffnungen für das Kühlmittel hinsichtlich einer Verteilung des Kühlmittels zwischen dem Zylinderkurbelgehäuse und dem Zylinderkopf anpassbar.

Auch in der DE 10 047 081 A1 ist eine Brennkraftmaschine mit einem Kühlsystem offenbart, bei dem eine Kühlmittelströmung durch Kühlmittelkanäle, die einerseits in einem Zylinderkurbelgehäuse und andererseits in einem Zylinderkopf ausgebildet sind, in Abhängigkeit von in den Kühlmittelkanälen angeordneten Thermostatventilen mittels einer Verteileinrichtung regelbar ist. Dabei ist vorgesehen, in einer Warmlaufphase der Brennkraftmaschine lediglich eine solche Kühlmittelmenge durch das Zylinderkurbelgehäuse zu leiten, die zum Abführen von Dampfblasen und zur Beheizung des dortigen Thermostatventils notwendig ist, und durch den Zylinderkopf lediglich eine solche Kühlmittelmengen zu leiten, die zum Abführen von Dampfblasen, zur Beheizung des dortigen Thermostatventils und gegebenenfalls für eine geforderte Heizleistung eines nachgeschalteten Heizungswärmetauschers notwendig ist.

In der FR 2 850 726 A1 ist eine Brennkraftmaschine mit einem Verbrennungsmotor und einem Kühlsystem, das eine Kühlmittelpumpe, einen Hauptkühler, einen Heizungswärmetauscher, einen den Heizungswärmetauscher umgehenden Bypass, Kühlmittelkanäle in dem Verbrennungsmotor sowie eine Regelvorrichtung mit einem Aktor zur geregelten Verteilung eines Kühlmittels in Abhängigkeit von mindestens einer lokalen Kühlmitteltemperatur umfasst, offenbart. Die Regelvorrichtung ist derart ausgebildet, dass diese bei einer Ansteuerung des Aktors in einer Richtung
- in einer ersten Stellung eine Kühlmittelströmung durch den Verbrennungsmotor und den Heizungswärmetauscher zulässt und durch den Bypass sowie den Hauptkühler unterbindet;
- in einer zweiten Stellung zusätzlich eine Kühlmittelströmung durch den Bypass zulässt;
- in einer dritten Stellung zusätzlich eine Kühlmittelströmung durch den Hauptkühler zulässt; und
- in einer vor der ersten Stellung liegenden Nullstellung eine Kühlmittelströmung durch das Kühlsystem unterbindet.

Eine dazu ähnliche Brennkraftmaschine, bei der jedoch nicht vorgesehen ist, in einer Nullstellung eine Kühlmittelströmung durch das Kühlsystem zu unterbinden, ist in der FR 2 849 673 A1 beschrieben.

Ausgehend von diesem Stand der Technik lag der Erfindung die Aufgabe zugrunde, bei einer Brennkraftmaschine mit einem Kühlsystem, das mehrere Komponenten umfasst, auf möglichst einfache und kostengünstige Weise eine Anpassung der Kühlmittelströmung durch die einzelnen Komponenten zu ermöglichen.

Diese Aufgabe wird durch eine Brennkraftmaschine gemäß dem Patentanspruch 1 gelöst. Vorteilhafte Ausführungsformen der erfindungsgemäßen Brennkraftmaschine sind Gegenstände der weiteren Patentansprüche und ergeben sich aus der nachfolgenden Beschreibung der Erfindung.

Der Erfindung liegt der Gedanke zugrunde, dass durch eine intelligente Abfolge eines Zubeziehungsweise Abschaltens der einzelnen Komponenten des Kühlsystems, die hinsichtlich der Durchströmung mittels eines Kühlmittels zu regeln sind, diese mittels lediglich eines anzusteuernden Aktors regelbar sind.

Dazu ist bei einer Brennkraftmaschine, die zumindest einen Verbrennungsmotor und ein Kühlsystem aufweist, wobei das Kühlsystem zumindest eine Kühlmittelpumpe, einen Hauptkühler, einen Heizungswärmetauscher, einen den Heizungswärmetauscher umgehenden Bypass, Kühlmittelkanäle in dem Verbrennungsmotor sowie eine Regelvorrichtung mit einem (vorzugsweise elektrischen, gegebenenfalls hydraulischen und/oder pneumatischen) Aktor zur geregelten Verteilung des Kühlmittels in Abhängigkeit von mindestens einer lokalen Kühlmitteltemperatur umfasst, erfindungsgemäß vorgesehen, dass die Regelvorrichtung bei einer Ansteuerung des Aktors in einer (Ansteuer- oder Bewegungs-)Richtung
- in einer ersten Stellung eine Kühlmittelströmung durch den Verbrennungsmotor und den Heizungswärmetauscher zulässt und durch den Bypass sowie den Umgebungswärmetauscher unterbindet;
- in einer zweiten Stellung zusätzlich eine Kühlmittelströmung durch den Bypass zulässt; und
- in einer dritten Stellung zusätzlich eine Kühlmittelströmung durch den Hauptkühler zulässt.

Diese Ausgestaltung der Brennkraftmaschine ermöglicht bereits mittels lediglich eines Aktors eine vorteilhafte Regelung und Verteilung des Kühlmittels in dem Kühlsystem.

Insbesondere kann dabei vorgesehen sein, dass in der ersten Stellung der Regelvorrichtung lediglich ein relativ kleiner Volumenstrom des Kühlmittels mittels der Kühlmittelpumpe durch einen (den Hauptkühler umgehenden) kleinen Kühlkreis des Kühlsystems gefördert wird, wobei lediglich der Verbrennungsmotor (zumindest teilweise) und der Heizungswärmetauscher durchströmt werden. Dadurch, dass nur ein relativ kleiner Volumenstrom des Kühlmittels durch den Verbrennungsmotor gefördert wird, kann insbesondere nach einem Kaltstart der Brennkraftmaschine ein schnelles Aufwärmen der entsprechenden Teilmenge des Kühlmittels und folglich ein relativ frühes Wirksamwerden des Heizungswärmetauschers und damit einer Heizung eines Kraftfahrzeugs, für dessen Antrieb die Brennkraftmaschine vorzugsweise vorgesehen ist, erreicht werden.

Unter einem "Heizungswärmetauscher" wird folglich ein Wärmetauscher verstanden, in dem ein Wärmeübergang von dem Kühlmittel des Kühlsystems auf Umgebungsluft, die zum Beheizen eines Innenraums eines Kraftfahrzeugs vorgesehen ist, erfolgt. Der Heizungswärmetauscher stellt somit, ebenso wie der Hauptkühler, einen Umgebungswärmetauscher dar.

Durch das Hinzuschalten des Bypasses in der zweiten Stellung der Regelvorrichtung kann dann bei zunehmender Betriebstemperatur der Brennkraftmaschine ein Überhitzten des Kühlsystems vermieden werden, indem, weiterhin in dem kleinen Kühlkreis und somit unter Umgehung des Hauptkühlers, durch den Verbrennungsmotor ein größerer Volumenstrom des Kühlmittels gefördert wird. Der den Heizungswärmetauscher umgehende Bypass kann dabei vorteilhaft sein, weil der maximale Volumenstrom durch den Heizungswärmetauscher, der durch die Querschnitte der Strömungsführungen des Heizungswärmetauschers und der zu diesem hin und von diesem weg führenden Leitungen des Kühlsystems begrenzt ist, vorzugsweise relativ klein dimensioniert ist und folglich nicht der gesamte Volumenstrom des Kühlmittels in der zweiten Stellung der Regelvorrichtung durch den Heizungswärmetauscher geführt werden kann und soll. Dies gilt insbesondere, weil vorgesehen sein kann, dass der Heizungswärmetauscher in der ersten und allen diesen nachfolgenden Stellungen der Regelvorrichtung von dem Kühlmittel durchströmt wird.

In der dritten Stellung der Regelvorrichtung erfolgt dann ein Zuschalten des Hauptkühlers, der durch einen Wärmeübergang von dem Kühlmittel an Umgebungsluft mit insbesondere dem ausschließlichen Zweck einer Kühlung des Kühlmittels gekennzeichnet ist. Somit kann vorgesehen sein, dass in der dritten Stellung der Regelvorrichtung das Kühlmittel in einem großen Kühlkreis des Kühlsystems gefördert wird.

Um sicherzustellen, dass in der dritten Stellung das gesamte Kühlmittel durch den Heizungswärmetauscher und den Hauptkühler geführt wird, kann in einer bevorzugten Ausgestaltung der erfindungsgemäßen Brennkraftmaschine vorgesehen sein, dass die Regelvorrichtung in der dritten Stellung eine Kühlmittelströmung durch den Bypass wieder unterbindet.

Für die erfindungsgemäße Brennkraftmaschine ist zudem eine Nullstellung für die Regelvorrichtung vorgesehen, die vor der ersten Stellung liegt. Dabei ist vorgesehen, dass die Regelvorrichtung in dieser Nullstellung eine Kühlmittelströmung durch das Kühlsystem insgesamt unterbindet. Dies kann besonders bevorzugt dadurch erreicht werden, dass die Regelvorrichtung in der Nullstellung das Kühlsystem in einem Abschnitt, der zwischen der Kühlmittelpumpe und dem Verbrennungsmotor und insbesondere auf der Druckseite der Kühlmittelpumpe angeordnet ist, unterbricht.

Eine vorteilhafte Kühlung des Verbrennungsmotors der erfindungsgemäßen Brennkraftmaschine kann erreicht werden, wenn sowohl ein Zylindergehäuse (insbesondere ein Zylinderkurbelgehäuse) als auch ein Zylinderkopf des Verbrennungsmotors jeweils mindestens einen Kühlkanal aufweist, wobei die Kühlkanäle, gesteuert durch die Regelvorrichtung, bedarfsgerecht von dem Kühlmittel durchströmt werden. Dabei kann insbesondere vorgesehen sein, dass die Regelvorrichtung in der ersten Stellung eine Kühlmittelströmung durch den Kühlmittelkanal des Zylinderkopfs zulässt und durch den Kühlmittelkanal des Zylindergehäuses unterbindet. Dadurch kann erreicht werden, dass in einem Betrieb der Brennkraftmaschine nach einem Kaltstart das Kühlmittel lediglich durch den Zylinderkopf (und den Heizungswärmetauscher) der Brennkraftmaschine, der im Vergleich zu dem Zylindergehäuse höher thermisch belastet und eine geringere, in diesem Betriebszustand der Brennkraftmaschine gegebenenfalls noch Wärmeenergie aus dem Kühlmittel aufnehmende Masse aufweist, wodurch nicht nur das für die Heizleistung des Heizungswärmetauschers vorteilhafte schnelle Aufwärmen des Kühlmittels sondern gleichzeitig auch schon eine Kühlung für den Zylinderkopf erreicht werden kann. Ein Durchströmen des Kühlmittelkanals des Zylindergehäuses ist dagegen noch nicht vorgesehen, wodurch erreicht werden kann, dass in diesem Betriebszustand ein schnelleres Erwärmen von Zylinderwänden des Zylindergehäuses erreicht werden kann, was sich positiv auf Reibungsverluste zwischen Zylinder und Kolben sowie auf das Emissionsverhalten der Brennkraftmaschine auswirkt.

Ein Zuschalten des Kühlmittelkanals des Zylindergehäuses in das Kühlsystem erfolgt vorzugsweise erst in einer zwischen der zweiten Stellung und der dritten Stellung liegenden Zwischenstellung der Regelvorrichtung, wobei dann die Betriebstemperatur der Brennkraftmaschine bereits so hoch sein kann, dass eine Kühlung auch des Zylindergehäuses sinnvoll oder notwendig ist.

In einer weiterhin bevorzugten Ausgestaltung der erfindungsgemäßen Brennkraftmaschine kann zudem vorgesehen sein , dass eine Verstellung zwischen zumindest zwei der Stellungen der Regelvorrichtung abgestuft oder stufenlos möglich ist, so dass die Regelvorrichtung in eine oder mehrere Teilstufen stellbar und in diesen auch gehalten werden kann. Dadurch kann eine weiter verbesserte Anpassung einer Durchströmung der einzelnen Komponenten mittels des Kühlmittels in Abhängigkeit von dem tatsächlichen Bedarf erreicht werden. Eine solche Ausgestaltung der Brennkraftmaschine kann insbesondere dann sinnvoll sein, wenn die Kühlmittelpumpe nicht unabhängig von Ihrer Förderdrehzahl hinsichtlich des Fördervolumenstroms regelbar ist. Dies kann insbesondere bei einer von dem Verbrennungsmotor direkt angetriebenen Kühlmittelpumpe der Fall sein.

Weiterhin kann vorgesehen sein, dass die Regelvorrichtung in Abhängigkeit von einem Betriebskennfeld der Brennkraftmaschine zwischen mindestens zwei Stellungen der Regelvorrichtung und insbesondere zwischen der zweiten Stellung und der dritten Stellung verstellbar ist. In einem solchen Betriebskennfeld kann insbesondere die Last über der Drehzahl, mit der die Brennkraftmaschine betrieben wird, aufgetragen sein. Dadurch kann in vorteilhafter Weise ein Wärmeübergang von dem Kühlmittel auf Umgebungsluft in dem Hauptkühler in Abhängigkeit von dem Betriebszustand und folglich in Abhängigkeit von der Wärmeerzeugung der Brennkraftmaschine gesteuert werden. Dies ermöglicht beispielsweise, eine Temperatur des Kühlmittels möglichst konstant zu halten oder bedarfsweise auf einen definierten Wert(ebereich), der insbesondere auch von dem Betriebszustand der Brennkraftmaschine abhängig sein kann, einzuregeln. Insbesondere kann bei relativ geringer Last und/oder Drehzahl eine höhere Kühlmitteltemperatur eingeregelt werden, die zu einer entsprechend hohen Öltemperatur und damit relativ geringen Reibungsverlusten führen kann. Bei höherer Last und/oder Drehzahl kann die Kühlmitteltemperatur dagegen zum Schutz des Verbrennungsmotors vor thermischer Überlastung verringert werden. Ermöglicht werden kann dadurch auch eine vorausschauende Regelung einer Temperatur des Kühlmittels, die, anders als beispielsweise eine entsprechende Regelung mittels eines Temperatursensors, nicht auf eine bereits erfolgte Temperaturänderung reagierend ausgebildet ist. Besonders bevorzugt kann dabei vorgesehen sein, dass das Verstellen zwischen den mindestens zwei Stellungen in Abhängigkeit von dem Betriebskennfeld der Brennkraftmaschine abgestuft oder stufenlos vorgesehen ist.

Für die erfindungsgemäße Brennkraftmaschine ist vorgesehen, dass die Regelvorrichtung zumindest zwei von dem Aktor translatorisch und/oder rotatorisch bewegte Sperrschieber umfasst, deren mittels des Aktors bewirkte Bewegungen zu einem den Stellungen der Regelvorrichtung entsprechenden Verschließen oder Freigeben von Einlässen und/oder Auslässen, die die Regelvorrichtung fluidleitend mit den entsprechenden Komponenten des Kühlsystems verbinden, führt.

Konkret umfasst die Regelvorrichtung einer erfindungsgemäße Brennkraftmaschine einen von dem Aktor bewegten ersten Sperrschieber und einen von dem ersten Sperrschieber bewegten zweiten Sperrschieber, wobei der zweite Sperrschieber (vorzugsweise ausschließlich) für das Erreichen der Nullstellung der Regelvorrichtung vorgesehen ist, in dem dieser in einer Verschlussstellung eine Kühlmittelströmung durch das Kühlsystem insgesamt unterbindet. Bevorzugt kann dabei vorgesehen sein, dass der erste Sperrschieber den zweiten Sperrschieber in seinem Bewegungsbereich nur teilweise mitbewegt. Dies ermöglicht insbesondere eine vereinfachte Ausgestaltungen des zweiten Sperrschiebers, der in einer bevorzugten Ausgestaltung der erfindungsgemäßen Brennkraftmaschine lediglich bei einem Verstellen der Regelvorrichtung zwischen der Nullstellung und der ersten Stellung (und gegebenenfalls andersherum) bewegt wird, während eine Bewegung des zweiten Sperrschiebers bei einem Verstellen der Regelvorrichtung zwischen den anderen Stellungen mittels des ersten Sperrschiebers nicht mehr vorgesehen ist. Eine solche Koppelung von erstem und zweitem Sperrschieber kann beispielsweise mittels eines Koppelhebelgetriebes, eines Malteserkreuzgetriebes und/oder eines Kurvengetriebe erreicht werden.

Eine Lagesicherung für den gegebenenfalls nicht dauerhaft an den ersten Sperrschieber gekoppelten zweiten Sperrschieber kann insbesondere auf einem Kraftschluss beruhen, indem für ein Bewegen des zweiten Sperrschiebers den Kraftschluss überwindende Kräfte erforderlich sind, die größer sind als diejenigen Kräfte, die sich infolge der Masse des zweiten Sperrschieber, d.h. trägheits- oder schwerkraftbedingt, und/oder aufgrund eines hydraulischen Drucks des Kühlmittels auf den zweiten Sperrschieber in den durch die Lagerung des zweiten Sperrschiebers ermöglichten Bewegungsrichtungen ergeben. Alternativ oder ergänzend kann auch eine formschlüssige Lagesicherung vorgesehen sein. Dabei kann insbesondere eine Lagersicherung des zweiten Sperrschiebers durch den ersten Sperrschieber erfolgen.

Eine konstruktiv einfache und insbesondere hinsichtlich des erforderlichen Bauraums vorteilhafte Ausgestaltungen der erfindungsgemäßen Brennkraftmaschine ist dadurch gekennzeichnet, dass der oder die Sperrschieber als Drehschieber ausgebildet sind.

Die Ansteuerung des Aktors der Regelvorrichtung erfolgt weiterhin bevorzugt in Abhängigkeit von einer dem Verbrennungsmotor zugeordneten lokalen Temperatur, die somit besonders bevorzugt in einem Kühlmittelkanal (besonders bevorzugt an einer Stelle, die einem Auslass dieses Kühlmittelkanals näher gelegen ist als einem Einlass) und/oder in einem an einen Auslass dieses Kühlmittelkanals angeschlossenen Abschnitt des Kühlsystems gemessen wird. Hierzu kann die erfindungsgemäße Brennkraftmaschine einen in dem Kühlmittelkanal des Verbrennungsmotors oder in einer sich in Strömungsrichtung des Kühlmittels direkt an diesen Kühlmittelkanal anschließenden Kühlmittelleitung angeordneten Kühlmitteltemperatursensor aufweisen.

Sofern dabei lediglich ein Temperatursensor vorgesehen sein soll, ist dieser vorzugsweise in einem Kühlmittelkanal des Zylinderkopfs angeordnet. Eine verbesserte Regelung der Verteilung des Kühlmittels mittels der Regelvorrichtung kann jedoch dadurch erzielt werden, dass diese in Abhängigkeit von einer ersten lokalen Temperatur des Kühlmittels in dem Zylinderkopf sowie einer zweiten lokalen Temperatur des Kühlmittels in dem Zylindergehäuse angesteuert wird. Demnach kann ein erster, in einem Kühlmittelkanal des Zylinderkopfs angeordneter Kühlmitteltemperatursensor und ein zweiter, in einem Kühlmittelkanal des Zylindergehäuses angeordneter Kühlmitteltemperatursensor vorgesehen sein.

Die unbestimmten Artikel ("ein", "eine", "einer und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die erfindungsgemäße Brennkraftmaschine wird nachfolgend anhand eines in den Zeichnungen dargestellten Ausführungsbeispiels näher erläutert. In den Zeichnungen:
- Fig. 1:: eine erfindungsgemäße Brennkraftmaschine schematisch in einem Blockschaltbild;
- Fig. 2:: eine Regelvorrichtung für eine erfindungsgemäße Brennkraftmaschine in einer Explosionsdarstellung;
- Fig. 3:: die Regelvorrichtung gemäß der Fig. 2 in einer Seitenansicht;
- Fig. 4:: die Regelvorrichtung gemäß der Fig. 2 und 3 mit nur teilweise gezeigtem Gehäuse;

- Fig. 5:: einen Aktor und die von diesem direkt oder indirekt betätigten Sperrschieber der Regelvorrichtung gemäß den Fig. 2 bis 4 in isolierter Darstellung; und
- Fig. 6:: die Durchströmung der einzelnen Komponenten einer erfindungsgemäßen Brennkraftmaschine gemäß der Fig. 1 durch das Kühlmittel in Abhängigkeit von den verschiedenen Stellungen der dazugehörigen Regelvorrichtung.

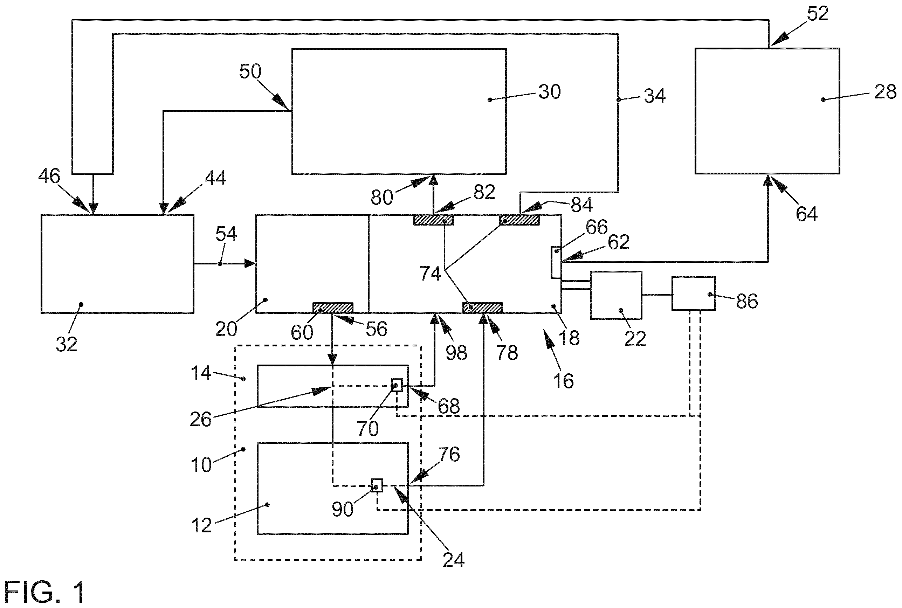

Die Fig. 1 zeigt schematisch eine erfindungsgemäße Brennkraftmaschine. Diese umfasst einen Verbrennungsmotor 10, der beispielsweise als nach dem Otto- oder Diesel-Prinzip arbeitender Hubkolben-Verbrennungsmotor ausgebildet sein kann und ein Zylindergehäuse 12 sowie einen Zylinderkopf 14 umfasst. Weiterhin weist die Brennkraftmaschine noch eine Regelvorrichtung 16 mit einem ersten Sperrschieber 18, einem zweiten Sperrschieber 20 und einem Aktor 22 auf. Der erste Sperrschieber 18 ist mittels des Aktors 22 bewegbar, während der zweite Sperrschieber 20 in einem Abschnitt der möglichen Gesamtbewegung des ersten Sperrschiebers 18 von diesem mitbewegt würde.

Die Regelvorrichtung 16 ist in ein Kühlsystem der Brennkraftmaschine integriert. In dieses Kühlsystem sind zudem noch Kühlmittelkanäle 24, 26 des Zylindergehäuses 12 und des Zylinderkopfs 14, ein Heizungswärmetauscher 28, ein Hauptkühler 30 sowie eine Kühlmittelpumpe 32 integriert. Die einzelnen Komponenten des Kühlsystems sind dabei über Kühlmittelleitungen fluidleitend verbunden. Weiterhin umfasst das Kühlsystem noch einen Bypass 34, der unter Umgehung sowohl des Heizungswärmetauschers 28 als auch des Hauptkühlers 30 einen Auslass 84 der Regelvorrichtung 16 mit einem Einlass 46 der Kühlmittelpumpe 32 verbindet.

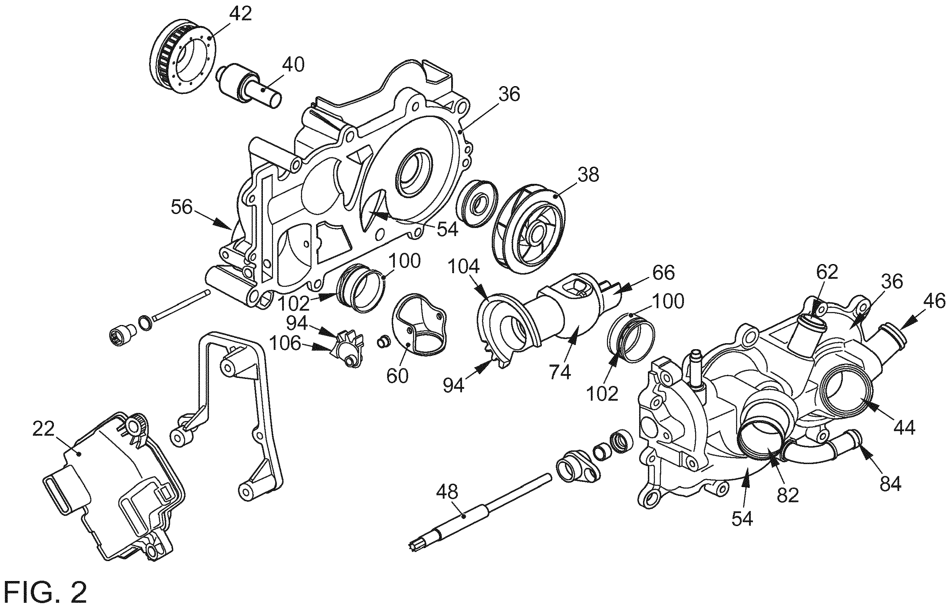

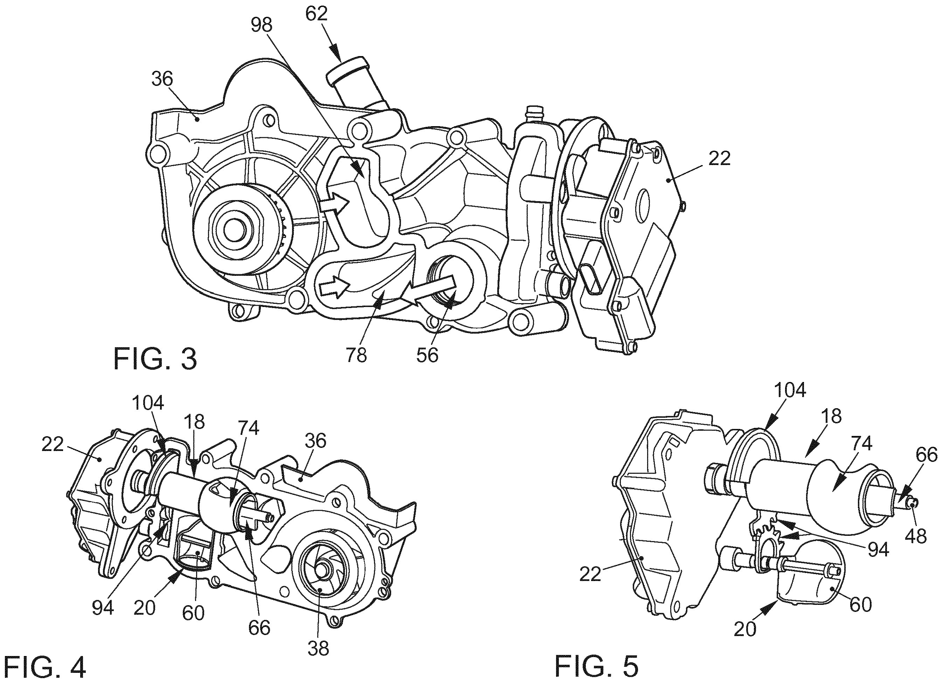

Die Fig. 2 bis 5 zeigen eine mögliche konstruktive Ausgestaltung der Regelvorrichtung 16 gemäß der Fig. 1. Bei dieser Regelvorrichtung 16 sind die Sperrschieber 18, 20 in Form von Drehschiebern ausgebildet, die in Abhängigkeit von ihrer jeweiligen Drehausrichtung Ein- und Auslässe für das die Regelvorrichtung 16 durchströmende Kühlmittel verschließen oder freigeben.

Die Regelvorrichtung 16 umfasst ein Gehäuse 36, in das auch ein Pumpenrad 38 einer als Flügelradpumpe ausgebildeten Kühlmittelpumpe 32 drehbar integriert ist. Eine Rotation des Pumpenrads 38 und damit ein Fördern von Kühlmittel in dem Kühlsystem wird durch den Verbrennungsmotor 10 bewirkt, wozu eine Kurbelwelle (nicht dargestellt) des Verbrennungsmotors 10 über einen Riementrieb mit einer Welle 40 für das Pumpenrad 38 verbunden ist. Von dem Riementrieb ist lediglich in der Fig. 2 ein mit der Welle 40 verbundenes Riemenrad 42 der Kühlmittelpumpe 32 gezeigt.

Zur Förderung des Kühlmittels wird dem Pumpenrad 38 Kühlmittel über einen ersten Einlass 44 und einen zweiten Einlass 46 der Kühlmittelpumpe 32 zugeführt. Der erste Einlass 44 ist über eine Kühlmittelleitung mit einem Auslass 50 des Hauptkühlers 30 verbunden. Der zweite Einlass 46 ist über Kühlmittelleitungen mit sowohl dem Bypass 34 als auch einem Auslass 52 des Heizungswärmetauschers 28 verbunden. Dabei ist vorgesehen, dass die den Bypass 34 ausbildende Kühlmittelleitung als Kanal in das Gehäuse 36 integriert ist.

Durch die Rotation des Pumpenrads 38 wird das Kühlmittel durch einen innerhalb des Gehäuses 36 ausgebildeten Kühlmittelkanal 54 zu einem ersten Auslass 56 der Regelvorrichtung 16 geführt. Dieser erste Auslass 56 ist in einer Nullstellung 58 der Regelvorrichtung 16 mittels eines Verschlusselements 60 des in einer Verschlussstellung befindlichen zweiten Sperrschiebers 20 verschlossen. Dadurch ist eine Kühlmittelzirkulation durch das Kühlsystem insgesamt unterbunden. In der Nullstellung 58 der Regelvorrichtung 16 befindet sich der erste Sperrschieber 18 in einer Ausrichtung, bei der ein zweiter Auslass 62 der Regelvorrichtung 16, der über eine Kühlmittelleitung mit einem Einlass 64 des Heizungswärmetauschers 28 verbunden ist, mittels eines ersten Verschlusselements 66 des ersten Sperrschiebers 18 verschlossen ist. Die Nullstellung 58 der Regelvorrichtung 16 ist für einen kurzen Zeitraum nach einem Kaltstart der Brennkraftmaschine vorgesehen. Ein Kaltstart der Brennkraftmaschine ist dadurch gekennzeichnet, dass die Komponenten der Brennkraftmaschine Temperaturen aufweisen, die im Wesentlichen der Umgebungstemperatur entsprechen, zumindest jedoch unterhalb einer definierten Grenztemperatur liegen.

Nach einem Kaltstart der Brennkraftmaschine und dem Erreichen eines definierten ersten Grenzwerts für eine lokale Kühlmitteltemperatur, die mittels eines ersten, in der Nähe eines Auslasses 68 des Zylinderkopfs 14 in den Kühlmittelkanal 26 integrierten ersten Kühlmitteltemperatursensors 70 gemessen wird, erfolgt ein Verstellen der Regelvorrichtung 16 von der Nullstellung 58 in eine erste Stellung 72 mittels des Aktors 22. Der Aktor 22 wird dazu von einer Motorsteuerung 86 der Brennkraftmaschine, der das Signal des Kühlmitteltemperatursensors 70 übermittelt wird, angesteuert. Dabei kann vorgesehen sein, dass das Verstellen der Regelvorrichtung 16 von der Nullstellung 58 in die erste Stellung 72 in Abhängigkeit von der mittels des ersten Kühlmitteltemperatursensors 70 gemessenen lokalen Kühlmitteltemperatur abgestuft oder stufenlos durch ein an einen Temperaturanstieg gebundenes Verdrehen des ersten Sperrschieber 18 und des damit noch drehend gekoppelten zweiten Sperrschieber 20 bewirkt wird. Möglich kann dabei auch ein zwischenzeitliches Zurückdrehen der Sperrschieber 18,20 sein. Ein Verdrehen des ersten Sperrschiebers 18 erfolgt mittels des Aktors 22, der mit dem ersten Sperrschieber 18 über eine Welle 48 verbunden ist.

In der ersten Stellung der Regelvorrichtung 16 befindet sich der zweite Sperrschieber 20 in einer Öffnungsstellung, bei der der erste Auslass 56 nicht mehr von dem Verschlusselement 60 verschlossen sondern im Wesentlichen vollständig freigegeben ist. Gleichzeitig befindet sich der erste Sperrschieber 18 in einer Ausrichtung, in der dessen erstes Verschlusselement 66 den zweiten Auslass 62 nicht mehr verschließt sondern im Wesentlichen vollständig freigibt. Gleichzeitig verschließt ein zweites Verschlusselement 74 des ersten Sperrschiebers 18 einen mit einem Auslass 76 des Zylindergehäuses 12 in Verbindung stehenden ersten Einlass 78 der Regelvorrichtung 16, einen mit einem Einlass 80 des Hauptkühlers 30 über eine Kühlmittelleitung in Verbindung stehenden dritten Auslass 82 der Regelvorrichtung 16 sowie einen mit dem Bypass 34 verbundenen vierten Auslass 84 der Regelvorrichtung 16. In der ersten Stellung der Regelvorrichtung 16 wird somit eine durch die Kühlmittelpumpe 32 bewirkte zirkulierende Förderung des Kühlmittels lediglich in einem kleinen, die Kühlmittelpumpe 32, die Regelvorrichtung 16, den Zylinderkopf 14 und den Heizungswärmetauscher 28 umfassenden Kühlkreis bewirkt.

Nach dem Erreichen eines definierten zweiten Grenzwerts für die mittels des ersten Kühlmitteltemperatursensors 70 gemessene lokale Kühlmitteltemperatur in dem Zylinderkopf 14 wird die Regelvorrichtung 16 von der ersten Stellung 72 in eine zweite Stellung 88 verstellt. Dabei wird der erste Sperrschieber 18 in eine Ausrichtung verdreht, in der der vierte Auslass 84 von den zweiten Verschlusselement 74 zunehmend freigegeben wird, wodurch der Bypass 34, parallel zu dem Heizungswärmetauscher 28, in den kleinen Kühlkreis integriert wird. Der erste Einlass 78 und der dritte Auslass 82 der Regelvorrichtung 16 sind dabei weiterhin von dem ersten Sperrschieber 18 verschlossen. Der zweite Sperrschieber 20 verbleibt während dieser Bewegung des ersten Sperrschiebers 18 in seiner Öffnungsstellung, da dieser nicht mehr drehend an den ersten Sperrschieber 18 gekoppelt ist. Durch die Integration des Bypasses 34 in den Kühlkreislauf kann der insgesamt geförderte Volumenstrom des Kühlmittels erhöht werden, um eine entsprechend hohe Kühlleistung für den Zylinderkopf 14 zu erreichen.

Die nur phasenweise Drehkopplung des ersten Sperrschiebers 18 an den zweiten Sperrschieber 20 wird durch Segmentverzahnungen 94 bewirkt, die nur dann miteinander in Eingriff sind, wenn der erste Sperrschieber 18 zwischen der Nullstellung 58 und der ersten Stellung 72 hin und her gedreht wird. Eine Lagesicherung des zweiten Sperrschiebers 20 in seiner Öffnungsstellung wird formschlüssig durch den ersten Sperrschieber 18 erreicht, indem ein an sich an die Segmentverzahnung 94 des ersten Sperrschiebers 18 anschließender Ringabschnitt 104 in eine sich an die Segmentverzahnung 94 des zweiten Sperrschiebers 20 anschließende konkave Vertiefung 106 eingreift und in dieser bei der Rotation des ersten Sperrschiebers 18 gleitend bewegt wird.

Nach einem Erreichen eines definierten dritten Grenzwerts für die mittels des ersten Kühlmitteltemperatursensors 70 gemessene lokale Kühlmitteltemperatur in dem Zylinderkopf 14 und/oder nach einem Erreichen eines ersten definierten Grenzwerts für eine mittels eines zweiten, in der Nähe des Auslasses 76 des Zylindergehäuses 12 angeordneten Kühlmitteltemperatursensors 90 gemessene lokale Kühlmitteltemperatur in dem Zylindergehäuse 12 wird die Regelvorrichtung 16 von der zweiten Stellung 88 in eine Zwischenstellung 92 verstellt. Dabei wird der erste Sperrschieber 18 in eine Ausrichtung verdreht, in der das zweite Verschlusselement 74 zusätzlich auch den ersten Einlass 78 der Regelvorrichtung 16 zunehmend freigibt. Folglich wird von diesem dann lediglich noch der dritte Auslass 82 der Regelvorrichtung 16 verschlossen gehalten und damit eine Durchströmung des Hauptkühlers 30 unterbunden. In der Zwischenstellung 92 ist somit auch eine Durchströmung des Zylindergehäuses 12 durch das Kühlmittel vorgesehen.

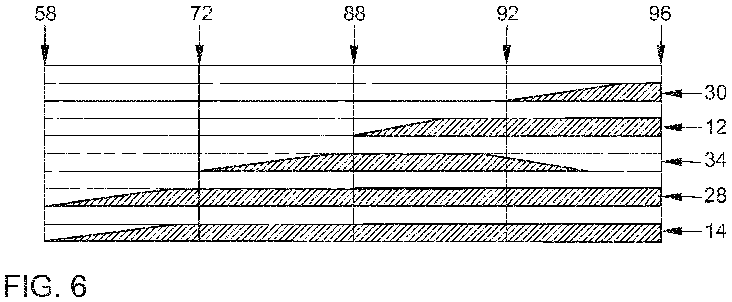

Nach dem Erreichen eines definierten vierten Grenzwerts für die mittels des ersten Kühlmitteltemperatursensors 70 gemessene lokale Kühlmitteltemperatur in dem Zylinderkopf 14 und/oder nach dem Erreichen eines zweiten definierten Grenzwerts für die mittels des zweiten Kühlmitteltemperatursensors 90 gemessene lokale Kühlmitteltemperatur in dem Zylindergehäuse 12 und/oder in Abhängigkeit von einem in der Motorsteuerung 86 abgespeicherten Betriebskennfeld der Brennkraftmaschine wird die Regelvorrichtung 16 von der Zwischenstellung 88 in eine dritte Stellung 96 verstellt. Dabei erfolgt ein zunehmendes Freigegeben des dritten Auslasses 82 der Regelvorrichtung 16 und folglich ein Einbinden des Hauptkühlers 30 in einen dann großen Kühlkreis, während gleichzeitig in zunehmendem Maße der vierte Auslass 84 der Regelvorrichtung 16 durch das zweite Verschlusselement 74 des ersten Sperrschieber 18 wieder verschlossen wird (vgl. Fig. 6). Dadurch wird sichergestellt, dass, mit Ausnahme eines vergleichsweise geringen Teils der Kühlmittelströmung, der durch den Heizungswärmetauscher 28 geführt wird, das Kühlmittel vollständig über den Hauptkühler 30 geleitet wird und darin durch einen Wärmeübergang auf Umgebungsluft gekühlt wird.

Die dritte Stellung der Regelvorrichtung 16 ist weiterhin für einen Nichtbetrieb der Brennkraftmaschine vorgesehen. Dadurch soll zum einen eine "Failsafe"-Funktion realisiert werden, durch die bei einem Defekt des Kühlsystem, der beispielsweise durch Marderbiss im Nichtbetrieb eines von der Brennkraftmaschine antreibbaren Kraftfahrzeugs hervorgerufen worden sein kann, ein (funktional eingeschränkter) Betrieb des Kühlsystems weiterhin gewährleistet werden kann. Weiterhin erleichtert die dritte Stellung der Regeleinrichtung im Nichtbetrieb der Brennkraftmaschine ein Befüllen und Entleeren des Kühlsystems im Rahmen von Wartungsarbeiten.

Das Gehäuse 36 der Regelvorrichtung 16 ist für ein direktes Verschrauben mit dem Zylinderkopf 14 des Verbrennungsmotors 10 an derjenigen Seite, die den ersten Auslass 56, den ersten Einlass 78 sowie einen zweiten Einlass 98, der mit dem Auslass 68 des Zylinderkopfs 14 verbunden ist, ausbildet, vorgesehen.

Eine Abdichtung des ersten Sperrschieber 18 und des zweiten Sperrschieber 20 in dem Gehäuse 36 wird über jeweils ein (mittels einer Tellerfeder 102) federbelastetes, ringförmiges Dichtungselement 100 bewirkt.

### BEZUGSZEICHENLISTE

- 10: Verbrennungsmotor
- 12: Zylindergehäuse
- 14: Zylinderkopf
- 16: Regelvorrichtung
- 18: erster Sperrschieber
- 20: zweiter Sperrschieber
- 22: Aktor
- 24: Kühlmittelkanal des Zylindergehäuses
- 26: Kühlmittelkanal des Zylinderkopfs
- 28: Heizungswärmetauscher
- 30: Hauptkühler
- 32: Kühlmittelpumpe
- 34: Bypass
- 36: Gehäuse
- 38: Pumpenrad
- 40: Welle
- 42: Riemenrad
- 44: erster Einlass der Kühlmittelpumpe
- 46: zweiter Einlass der Kühlmittelpumpe
- 48: Welle
- 50: Auslass des Hauptkühlers
- 52: Auslass des Heizungswärmetauschers
- 54: Kühlmittelkanal
- 56: erster Auslass der Regelvorrichtung
- 58: Nullstellung der Regelvorrichtung
- 60: Verschlusselement des zweiten Sperrschiebers
- 62: zweiter Auslass der Regelvorrichtung
- 64: Einlass des Heizungswärmetauschers
- 66: erstes Verschlusselement des ersten Sperrschiebers
- 68: Auslass des Zylinderkopfs
- 70: erster Kühlmitteltemperatursensor
- 72: erste Stellung der Regelvorrichtung
- 74: zweites Verschlusselement des ersten Sperrschiebers
- 76: Auslass des Zylindergehäuses
- 78: erster Einlass der Regelvorrichtung
- 80: Einlass des Hauptkühlers
- 82: dritter Auslass der Regelvorrichtung
- 84: vierter Auslass der Regelvorrichtung
- 86: Motorsteuerung
- 88: zweite Stellung der Regelvorrichtung
- 90: zweiter Kühlmitteltemperatursensor
- 92: Zwischenstellung der Regelvorrichtung
- 94: Segmentverzahnung
- 96: dritte Stellung der Regelvorrichtung
- 98: zweiter Einlass der Regelvorrichtung
- 100: Dichtungselement
- 102: Tellerfeder
- 104: Ringabschnitt
- 106: Vertiefung

## Patentansprüche

1. Brennkraftmaschine mit einem Verbrennungsmotor (10) und einem Kühlsystem, das eine Kühlmittelpumpe (32), einen Hauptkühler (30), einen Heizungswärmetauscher (28), einen den Heizungswärmetauscher (28) umgehenden Bypass (34), Kühlmittelkanäle (24, 26) in dem Verbrennungsmotor (10) sowie eine Regelvorrichtung (16) mit einem Aktor (22) zur geregelten Verteilung eines Kühlmittels in Abhängigkeit von mindestens einer lokalen Kühlmitteltemperatur umfasst, wobei die Regelvorrichtung (16) bei einer Ansteuerung des Aktors (22) in einer Richtung
- in einer ersten Stellung (72) eine Kühlmittelströmung durch den Verbrennungsmotor (10) und den Heizungswärmetauscher (28) zulässt und durch den Bypass (34) sowie den Hauptkühler (30) unterbindet;
- in einer zweiten Stellung (88) zusätzlich eine Kühlmittelströmung durch den Bypass (34) zulässt;
- in einer dritten Stellung (96) zusätzlich eine Kühlmittelströmung durch den Hauptkühler (30) zulässt; und
- in einer vor der ersten Stellung (72) liegenden Nullstellung (58) eine Kühlmittelströmung durch das Kühlsystem unterbindet,
**dadurch gekennzeichnet, dass** die Regelvorrichtung einen von dem Aktor (22) bewegten ersten Sperrschieber (18) und einen von dem ersten Sperrschieber (18) bewegten zweiten Sperrschieber (20) umfasst, wobei in einer Verschlussstellung des zweiten Sperrschiebers (20) eine Kühlmittelströmung durch das Kühlsystem unterbunden ist.

2. Brennkraftmaschine gemäß Anspruch 1, **dadurch gekennzeichnet, dass** die Regelvorrichtung (16) in der dritten Stellung (96) eine Kühlmittelströmung durch den Bypass (34) wieder unterbindet.

3. Brennkraftmaschine gemäß Anspruch 1 oder 2, **dadurch gekennzeichnet, dass** die Regelvorrichtung (16) in der Nullstellung (58) das Kühlsystem in einem Abschnitt zwischen der Kühlmittelpumpe (32) und dem Verbrennungsmotor (10) verschließt.

4. Brennkraftmaschine gemäß einem der vorhergehenden Ansprüche, **dadurch gekennzeichnet, dass** der Verbrennungsmotor (10) ein Zylindergehäuse (12) und einen Zylinderkopf (14) umfasst, wobei die Regelvorrichtung (16) in der ersten Stellung (72) eine Kühlmittelströmung durch einen Kühlmittelkanal (26) des Zylinderkopfs (14) zulässt und durch einen Kühlmittelkanal (24) des Zylindergehäuses (12) unterbindet.

5. Brennkraftmaschine gemäß Anspruch 4, **dadurch gekennzeichnet, dass** die Regelvorrichtung (16) in einer zwischen der zweiten Stellung (88) und der dritten Stellung (96) liegenden Zwischenstellung (92) zusätzlich eine Kühlmittelströmung durch den Kühlmittelkanal (24) des Zylindergehäuses (12) zulässt.

6. Brennkraftmaschine gemäß einem der vorhergehenden Ansprüche, **dadurch gekennzeichnet, dass** eine Verstellung zwischen zumindest zwei der Stellungen der Regelvorrichtung (16) abgestuft oder stufenlos möglich ist.

7. Brennkraftmaschine gemäß einem der vorhergehenden Ansprüche, **dadurch gekennzeichnet, dass** der erste Sperrschieber (18) in seinem Bewegungsbereich den zweiten Sperrschieber (20) nur abschnittsweise mitbewegt.

8. Brennkraftmaschine gemäß einem der vorhergehenden Ansprüche, **dadurch gekennzeichnet, dass** der zweite Sperrschieber (20) kraftschlüssig und/oder formschlüssig lagegesichert ist, wenn er nicht von dem ersten Sperrschieber (18) mitbewegt wird.

9. Brennkraftmaschine gemäß einem der vorhergehenden Ansprüche, **dadurch gekennzeichnet, dass** der oder die Sperrschieber (18, 20) als Drehschieber ausgebildet sind.

10. Brennkraftmaschine gemäß einem der vorhergehenden Ansprüche, **gekennzeichnet durch** einen in einem Kühlmittelkanal (24, 26) des Verbrennungsmotors angeordneten Kühlmitteltemperatursensor (70, 90).

11. Brennkraftmaschine gemäß Anspruch 4 oder einem der von Anspruch 4 abhängigen Ansprüche und Anspruch 0, **gekennzeichnet durch** einen in einem Kühlmittelkanal (26) des Zylinderkopfs 14 angeordneten ersten Kühlmitteltemperatursensor 70 und einen in einem Kühlmittelkanal (26) des Zylindergehäuses (12) angeordneten zweiten Kühlmitteltemperatursensor (90).

12. Brennkraftmaschine gemäß einem der vorhergehenden Ansprüche, **dadurch gekennzeichnet, dass** die Regelvorrichtung (16) in Abhängigkeit von einem Betriebskennfeld der Brennkraftmaschine zwischen der zweiten Stellung (88) und der dritten Stellung (96) verstellbar ist.

## Claims

1. The invention relates to an internal combustion engine comprising an internal combustion engine (10) and a cooling system which comprises a coolant pump (32), a main cooler (30), a heating heat exchanger (28), a bypass (34) bypassing the heating heat exchanger (28), coolant channels (24, 26) in the internal combustion engine (10), and a regulating device (16) having an actuator (22) for the regulated distribution of a coolant as a function of at least one local coolant temperature, wherein the regulating device (16), during an actuation of a actuator (22) in one direction
- in a first position (72) allows a flow of coolant through the internal combustion engine (10) and the heating heat exchanger (28) and prevents such flow through the bypass (34) and the main cooler (30);
- in a second position (88) additionally allows a flow of coolant through the bypass (34);
- in a third position (96) additionally allows a flow of coolant through the main cooler (30); and
- in a zero position (58) situated in front of the first position (72) prevents a flow of coolant through the cooling system,
**characterized in that** the regulating device comprises a first gate valve (18) moved by the actuator (22) and a second gate valve (20) moved by the first gate valve (18), wherein a coolant flow through the cooling system is prevented in a closed position of the second gate valve (20).

2. Internal combustion engine according to Claim 1, **characterized in that** the regulating device (16) in the third position (96) again prevents a flow of coolant through the bypass (34).

3. Internal combustion engine according to Claims 1 or 2, **characterized in that** the regulating device (16) in the zero position (58) closes the cooling system in a section between the coolant pump (32) and the internal combustion engine (10).

4. Internal combustion engine according to any one of the preceding claims, **characterized in that** the internal combustion engine (10) comprises a cylinder housing (12) and a cylinder head (14), wherein in the first position (72) the regulating device (16) allows a flow of coolant through a coolant channel (26) of the cylinder head (14) and prevents it through a coolant channel (24) of the cylinder housing (12).

5. Internal combustion engine according to Claim 4, **characterized in that** the regulating device (16) in an intermediate position (92) lying between the second position (88) and the third position (96) additionally allows a flow of coolant through the coolant channel (24) of the cylinder housing (12).

6. Internal combustion engine according to any one of the preceding claims, **characterized in that** a shift between at least two of the positions of the regulating device (16) is possible in a graduated or infinitely variable manner.

7. Internal combustion engine according to any one of the preceding claims, **characterized in that** the first gate valve (18) in its range of movement causes the second gate valve (20) to move together with it only in sections.

8. Internal combustion engine according to any one of the preceding claims, **characterized in that** the second gate valve (20) is non-positively and/or positively secured in position when the first gate valve (18) is not causing said second gate valve to move together with it.

9. Internal combustion engine according to any one of the preceding claims, **characterized in that** the gate valve or valves (18, 20) are designed as rotary valves.

10. Internal combustion engine according to any one of the preceding claims, **characterized by** a coolant temperature sensor (70, 90) arranged in a coolant channel (24, 26) of the internal combustion engine.

11. Internal combustion engine according to Claim 4 or any one of the claims subordinate to Claim 4 and Claim 0, **characterized by** a first coolant temperature sensor 70 arranged in a coolant channel (26) of the cylinder head 14 and a second coolant temperature sensor (90) arranged in a coolant channel (26) of the cylinder housing (12).

12. Internal combustion engine according to any one of the preceding claims, **characterized in that** the regulating device (16) can be adjusted between the second position (88) and the third position (96) as a function of an operating characteristic of the internal combustion engine.

## Revendications

1. Moteur à combustion interne comprenant un moteur à combustion (10) et un système de refroidissement, qui comprend une pompe à liquide de refroidissement (32), un radiateur principal (30), un radiateur de chauffage (28), une dérivation (34) qui évite le radiateur de chauffage (28), des conduits de liquide de refroidissement (24, 26) dans le moteur à combustion (10) ainsi qu'un dispositif régulateur (16) doté d'un actionneur (22) pour la distribution régulée d'un liquide de refroidissement en fonction d'au moins une température locale de liquide de refroidissement, dans lequel, lors d'une commande de l'actionneur (22) dans une direction, le dispositif régulateur (16)
- permet, dans une première position (72), un écoulement de liquide de refroidissement par le moteur à combustion (10) et le radiateur de chauffage (28) et empêche l'écoulement de liquide de refroidissement par la dérivation (34) et le radiateur principal (30) ;
- permet, dans une deuxième position (88), en outre un écoulement de liquide de refroidissement par la dérivation (34) ;
- permet, dans une troisième position (96), en outre un écoulement de liquide de refroidissement par le radiateur principal (30) ; et
- empêche, dans une position neutre (58) située avant la première position (72), un écoulement de liquide de refroidissement par le système de refroidissement,
**caractérisé en ce que** le dispositif régulateur comprend une première vanne d'arrêt (18) déplacée par l'actionneur (22) et une deuxième vanne d'arrêt (20) déplacée par la première vanne d'arrêt (18), un écoulement de liquide de refroidissement par le système de refroidissement étant empêché dans une position de fermeture des deux vannes d'arrêt (20).

2. Moteur à combustion interne selon la revendication 1, **caractérisé en ce que,** dans la troisième position (96), le dispositif régulateur (16) empêche de nouveau un écoulement de liquide de refroidissement par la dérivation (34).

3. Moteur à combustion interne selon la revendication 1 ou 2, **caractérisé en ce que,** dans la position neutre (58), le dispositif régulateur (16) ferme le système de refroidissement dans un tronçon situé entre la pompe à liquide de refroidissement (32) et le moteur à combustion (10).

4. Moteur à combustion interne selon l'une quelconque des revendications précédentes, **caractérisé en ce que** le moteur à combustion (10) comprend un logement de cylindre (12) et une culasse de cylindre (14), le dispositif régulateur (16) permettant, dans la première position (72), un écoulement de liquide de refroidissement par un conduit de liquide de refroidissement (26) de la culasse de cylindre (14) et empêchant l'écoulement de liquide de refroidissement par un conduit de liquide de refroidissement (24) du logement de cylindre (12).

5. Moteur à combustion interne selon la revendication 4, **caractérisé en ce que** le dispositif régulateur (16) permet, dans une position intermédiaire située entre la deuxième position (88) et la troisième position (96), en outre un écoulement de liquide de refroidissement par le conduit de liquide de refroidissement (24) du logement de cylindre (12).

6. Moteur à combustion interne selon l'une quelconque des revendications précédentes, **caractérisé en ce qu'**un réglage entre au moins deux des positions du dispositif régulateur (16) est possible par paliers ou en continu.

7. Moteur à combustion interne selon l'une quelconque des revendications précédentes, **caractérisé en ce que** la première vanne d'arrêt (18) déplace avec elle, dans sa zone de déplacement, la deuxième vanne d'arrêt (20) uniquement sur un tronçon.

8. Moteur à combustion interne selon l'une quelconque des revendications précédentes, **caractérisé en ce que** la deuxième vanne d'arrêt (20) est fixée dans sa position par adhérence et/ou par complémentarité de forme, quand elle n'est pas déplacée par la première vanne d'arrêt (18).

9. Moteur à combustion interne selon l'une quelconque des revendications précédentes, **caractérisé en ce que** la ou les vannes d'arrêt (18, 20) sont réalisées sous la forme de vannes rotatives.

10. Moteur à combustion interne selon l'une quelconque des revendications précédentes, **caractérisé par** un capteur de température de liquide de refroidissement (70, 90) disposé dans un conduit de liquide de refroidissement (24, 26) du moteur à combustion.

11. Moteur à combustion interne selon la revendication 4 ou l'une des revendications dépendantes de la revendication 4 et la revendication 0, **caractérisé par** un premier capteur de température de liquide de refroidissement 70 disposé dans un conduit de liquide de refroidissement (26) de la culasse de cylindre 14 et un deuxième capteur de température de liquide de refroidissement (90) disposé dans un conduit de liquide de refroidissement (26) du logement de cylindre (12).

12. Moteur à combustion interne selon l'une quelconque des revendications précédentes, **caractérisé en ce que** le dispositif régulateur (16) peut être réglé entre la deuxième position (88) et la troisième position (96) en fonction d'un diagramme caractéristique de fonctionnement du moteur à combustion interne.
